# EUROPÄISCHE PATENTSCHRIFT

(11) **EP 3 969 307 B1**
(45) Veröffentlichungstag und Bekanntmachung des Hinweises auf die Patenterteilung: **20.09.2023**
(21) Anmeldenummer: 20726688.3
(22) Anmeldetag: 06.05.2020
(51) Int. Cl.: B60K 1/02, H02K 5/20, H02K 5/15, H02K 5/173, H02K 9/19

(54) **ELEKTRISCHE ANTRIEBSEINHEIT FÜR EIN KRAFTFAHRZEUG**
ELECTRIC DRIVE UNIT FOR A MOTOR VEHICLE
UNITÉ D'ENTRAÎNEMENT ÉLECTRIQUE POUR VÉHICULE AUTOMOBILE

(30) Priorität: 15.05.2019 DE 102019112739
(43) Veröffentlichungstag der Anmeldung: 23.03.2022
(73) Patentinhaber: BPW Bergische Achsen KG, 51674 Wiehl (DE)
(72) Erfinder: MAGYAR, Francisca, 51580 Reichshof (DE); LÖHE, Frank, 53809 Ruppichteroth (DE)
(74) Vertreter: DREISS Patentanwälte PartG mbB
(86) Internationale Anmeldenummer: PCT/DE2020/100375
(87) Internationale Veröffentlichungsnummer: WO 2020/228897

(56) Entgegenhaltungen:
- DE-A1- 4 236 093
- DE-A1-102010 033 269
- US-A- 4 429 924
- US-B2- 7 594 757

## Beschreibung

Die Erfindung betrifft eine elektrische Antriebseinheit nach dem Oberbegriff des Patentanspruchs 1 und des Patentanspruchs 9.

Aus der WO 98/40958 und in ähnlicher Bauweise aus der DE 42 36 093 A1 ist eine elektrische Antriebseinheit mit zwei auf zueinander fluchtenden Drehachsen angeordneten Elektroantrieben bekannt. Die zwei Elektroantriebe befinden sich zwar innerhalb eines Gehäusemantels eines gemeinsamen Antriebsgehäuses, sie sind jedoch ansonsten voneinander unabhängig und dementsprechend mit jeweils eigenen Rotorwellen versehen, deren Wellenenden einander abgewandt aus dem Antriebsgehäuse herausgeführt sind. Die anderen, einander benachbarten Wellenenden der Rotorwellen sind beide in einem Lagergehäuse drehgelagert. Das Lagergehäuse ist der zentrale Bereich eines Lagerschilds, das als eine runde Platte gestaltet ist und das Antriebsgehäuse in einen ersten Gehäuseabschnitt mit dem ersten Elektroantrieb, und einen zweiten Gehäuseabschnitt mit dem zweiten Elektroantrieb unterteilt.

Da sich an dem Lagerschild mit dem zentral darin angeordneten Lagergehäuse die eine der beiden Drehlagerungen der Rotorwelle befindet, ist das Lagerschild entsprechend stark dimensioniert, zumal das Lagerschild neben der Abstützung der Wellenkräfte auch einen Beitrag zur Festigkeit des Antriebsgehäuses leistet. Für die Baulänge des Antriebsgehäuses bestimmend sind daher nicht nur die Maße der elektrischen Antriebseinheiten selbst, sondern auch der zusätzliche Bauraum, den das Lagerschild beansprucht.

Der Erfindung liegt die **Aufgabe** zugrunde, eine elektrische Antriebseinheit mit zwei hintereinander in einem gemeinsamen Antriebsgehäuse angeordneten Elektroantrieben zu schaffen, die in Längsrichtung kompakt baut, ohne dass damit Nachteile bei der Festigkeit des Antriebsgehäuses verbunden sind.

Zur **Lösung** dieser Aufgabe wird eine elektrische Antriebseinheit mit den Merkmalen des Patentanspruchs 1 sowie eine elektrische Antriebseinheit mit den Merkmalen des Patentanspruchs 9 vorgeschlagen. Bei dieser elektrischen Antriebseinheit dient als Lagerschild keine geschlossene Platte, sondern Bestandteile des Lagerschilds sind Streben, die sich von dem zentral in dem Lagerschild angeordneten Lagergehäuse nach außen erstrecken. Diese Streben bilden gemeinsam einen Verbindungsbereich, welcher das zentral angeordnete Lagergehäuse mit dem Gehäusemantel des Antriebsgehäuses verbindet. Da das Lagerschild kein vollflächiges Bauteil ist, sondern der Verbindungsbereich des Lagerschilds nur aus den einzelnen Streben gebildet wird, verbleiben zwischen den Streben Öffnungen und damit Hohlräume. Die Öffnungen bieten Platz z. B. für elektrische Anschlüsse der Elektroantriebe oder für Kühlmaßnahmen und damit Platz für solche Maßnahmen, die ansonsten einen zusätzlichen Bauraum in dem Antriebsgehäuse beanspruchen würden. Das Lagerschild sowie das Lagergehäuse können form- und kraftschlüssig im Antriebsgehäuse angeordnet werden, wobei auch eine einteilige Ausführungsform eines Antriebsgehäuses mit Lagerschild und Lagergehäuse durch Guss möglich ist.

Zugleich hat sich herausgestellt, dass es für die ausreichende Stabilität des Lagerschilds und damit für die angestrebte Gesamtfestigkeit des Antriebsgehäuses nicht notwendig ist, dass das Lagerschild als eine vollflächige Platte gestaltet ist. Auch mit einem Lagerschild aus diskreten Streben, die sich von dem Lagergehäuse radial nach außen erstrecken und so die einzige Verbindung mit dem umgebenden Gehäusemantel herstellen, lässt sich eine ausreichende Aussteifung und damit ein Beitrag zur Gesamtfestigkeit des Antriebsgehäuses erzielen.

Bevorzugte Ausgestaltungen der elektrischen Antriebseinheiten sind in den jeweiligen Unteransprüchen angegeben.

Da der Verbindungsbereich des Lagerschilds aus einzelnen Streben besteht, ist es zur Erzielung möglichst großer Öffnungen zwischen den Streben von Vorteil, wenn ausschließlich die Streben mit ihren äußeren Enden den Außenumfang des Lagerschilds bilden und das Lagerschild mit dem Gehäusemantel des Antriebsgehäuse verbinden. Die Streben sind also miteinander nur an ihren inneren Enden verbunden, nämlich über das Lagergehäuse, und nicht an ihren äußeren Enden. Die äußeren Enden der Streben sind vielmehr nur mit dem Gehäusemantel des Antriebsgehäuses verbunden.

Den Verbindungsbereich des Lagerschilds bilden drei oder mehr Streben, welche an dem Lagerschild eine gleiche Anzahl von drei oder mehr Öffnungen unterteilen. Die Öffnungen haben die Gestalt von um das Lagergehäuse herum angeordneten Öffnungssegmenten.

Gemäß der Ausgestaltung nach Anspruch 1 befindet sich eine erste Öffnung im Antriebsgehäuse unten. In diese erste Öffnung mündet eine unten im Gehäusemantel des Antriebsgehäuses ausgebildete Kühlmittelöffnung radial ein. Auf diese Weise verbindet die Kühlmittelöffnung die erste Öffnung mit einer außen an dem Gehäusemantel flüssigkeitsdicht angeordneten Kühlmittelwanne.

Da die erste Öffnung nur der Einmündung der Kühlmittelöffnung dient, kann die erste Öffnung relativ klein gestaltet sein. Daher wird vorgeschlagen, dass die erste Öffnung kleiner als jede der weiteren Öffnungen ist. Vorzugsweise sind die weiteren Öffnungen von jeweils gleicher Größe.

Durch zumindest eine der Streben verläuft ein Kühlmittelkanal, welcher von einer Kühlmittelöffnung, mit der der Gehäusemantel in Verlängerung der Strebe versehen ist, bis in das Lagergehäuse führt. Dadurch ist es möglich, Kühlmittel über den in der Strebe ausgebildeten Kühlmittelkanal in den Bereich des zentral im Lagerschild angeordneten Lagergehäuses zu führen, um zum Beispiel die dort angeordneten Wälzlager für die Wellenenden der Rotorwellen mit Kühlmittel zu versorgen.

Vorzugsweise ist die Kühlmittelöffnung eine Gewindebohrung, deren Querschnitt größer als der Querschnitt des in der Strebe verlaufenden Kühlmittelkanals ist, wobei in die Gewindebohrung ein Kühlmittel-Anschlussstutzen eingeschraubt ist.

Mit einer weiteren Ausgestaltung wird vorgeschlagen, dass die Streben, in Umfangsrichtung des Lagerschilds betrachtet, von unterschiedlicher Breite sind, und dass die Breite der Strebe, durch die der Kühlmittelkanal verläuft, größer ist als die Breite einer Strebe ohne darin verlaufenden Kühlmittelkanal.

Ferner wird vorgeschlagen, dass in dem Lagergehäuse des Lagerschilds getrennte Wälzlager für die Wellenenden der beiden Rotorwellen angeordnet sind. Jedes Wälzlager umschließt mit seinem Innenring das jeweilige Wellenende und ist mit seinem Außenring in dem Lagergehäuse abgestützt. Das Lagergehäuse ist mit einer zentral darin angeordneten Durchgangsöffnung versehen, in die sich von beiden Seiten her die jeweiligen Wellenenden erstrecken, und in die der Kühlmittelkanal einmündet.

Gemäß der Ausgestaltung nach Anspruch 9 ist in dem Gehäusemantel im Bereich zweier Öffnungen des Lagerschilds jeweils ein Fenster ausgebildet, durch welches und durch die jeweilige Öffnung Elektroleitungen platzsparend zu den Elektroantrieben geführt sind.

Die Fenster sind vorzugsweise auf einander abgewandten Umfangsabschnitten des Gehäusemantels angeordnet. Die Fenster sind außen durch Schutzkästen abgedeckt, wobei die Schutzkästen modular an dem Antriebsgehäuse festlegbar, oder einteilig an dem Antriebsgehäuse mit angegossen sind In den Schutzkästen befinden sich elektrische Verbindungsklemmen, an die die zu den Elektromotoren führenden Elektroleitungen angeschlossen sind. Um die Außenmaße der elektrischen Antriebseinheit kompakt zu halten, weisen die Schutzkästen vorzugsweise eine Haupterstreckung parallel zur Längsrichtung des Antriebsgehäuses auf.

Für die kompakte Bauweise der Antriebseinheit ist ferner von Vorteil, wenn erste Elektroleitungen zu einer an dem ersten Elektroantrieb angebrachten ersten Anschlussleiste führen, die sich in die eine Öffnung hinein erstreckt, und wenn zweite Elektroleitungen zu einer an dem zweiten Elektroantrieb angebrachten zweiten Anschlussleiste führen, die sich in die andere Öffnung hinein erstreckt. Die mit den Öffnungen in dem Lagerschild zur Verfügung stehenden Hohlräume werden daher genutzt, darin die Anschlussleisten der Elektroantriebe platzsparend unterzubringen.

Diese Ausgestaltung ist dann von besonderem Vorteil, wenn die beiden Anschlussleisten auf unterschiedlichen Umfangsabschnitten in dem Gehäusemantel angeordnet sind, und wenn sich die Anschlussleisten so weit in die jeweilige Öffnung hinein erstrecken, dass sich die Anschlussleisten in Längsrichtung des Antriebsgehäuses teilweise überlappen.

Hinsichtlich der Verbindung der Streben mit dem Gehäusemantel des Antriebsgehäuses wird vorgeschlagen, dass jede Strebe axial gegen eine von dem Gehäusemantel nach innen ragende Rippe abgestützt ist, wobei sie in dieser Position mit dem Gehäusemantel verschweißt ist. Die Rippe ist vorzugsweise einstückiger Bestandteil des Gehäusemantels. Bei einer anderen möglichen Ausgestaltung sind der Gehäusemantel und das Lagerschild in einem Stück gefertigt, z. B. durch Guss.

Vorzugsweise setzt sich die Rippe in Umfangsrichtung aus einzelnen, getrennten Rippensegmenten zusammen, wobei die Rippensegmente nur auf Umfangsabschnitten des Gehäusemantels angeordnet sind, auf denen sich die Streben befinden. Auch diese Ausgestaltung trägt dazu bei, dass die Öffnungssegmente zwischen den Rippen möglichst groß ausfallen.

Die Beschränkung auf einzelne Rippensegmente führt außerdem zu dem Vorteil, dass der Gehäusemantel auf den Umfangsabschnitten ohne Rippensegmente z. B. mit Fenstern, Öffnungen oder dergleichen Durchbrüchen versehen sein kann.

Vorzugsweise ist das Lagerschild derart in dem Antriebsgehäuse angeordnet, dass das Lagerschild zu jedem der beiden Elektroantriebe den gleichen axialen Abstand hat.

Weitere Vorteile und Einzelheiten ergeben sich aus der nachfolgenden Beschreibung eines Ausführungsbeispiels, wobei auf die Zeichnungen Bezug genommen wird. Darin zeigen:
- Fig. 1:: in einer perspektivischen Gesamtdarstellung eine in eine Fahrzeugachse integrierte elektrische Antriebseinheit für ein Kraftfahrzeug;
- Fig. 2:: eine Längsansicht der Antriebseinheit, wobei der zentrale Bereich als Längsschnitt in einer in Fig. 1 senkrechten Schnittebene wiedergegeben ist;
- Fig. 3:: eine weitere Längsansicht der Antriebseinheit, wobei der zentrale Bereich als Längsschnitt in einer in Fig. 1 waagerechten Schnittebene wiedergegeben ist;
- Fig. 4:: in einer gegenüber Fig. 2 vergrößerten Darstellung den zentralen Bereich der elektrischen Antriebseinheit einschließlich eines dort angeordneten Lagerschilds;
- Fig. 5:: die elektrische Antriebseinheit aus der in Fig. 1 eingezeichneten Blickrichtung V;
- Fig. 6:: einen Querschnitt durch die elektrische Antriebseinheit im Bereich des Lagerschildes;
- Fig. 7:: eine Einzeldarstellung des Lagerschildes;
- Fig. 8:: eine weitere Einzeldarstellung des Lagerschildes, hier in perspektivischer Ansicht;
- Fig. 9:: eine Längsansicht einer nicht zur Erfindung gehörenden Ausführungsform der Antriebseinheit, wobei der
zentrale Bereich als Längsschnitt in einer senkrechten Schnittebene wiedergegeben ist.

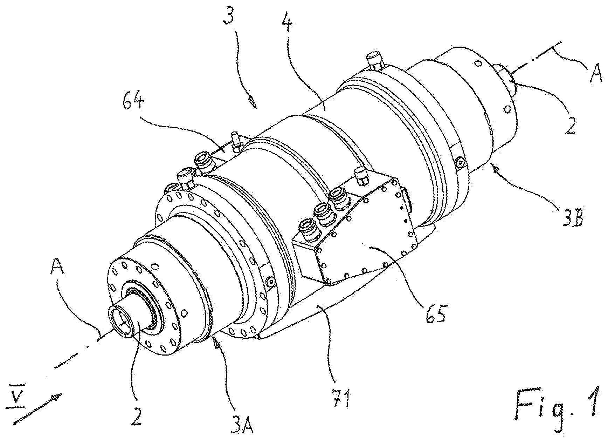

Die Fig. 1 zeigt in einer Übersichtsdarstellung den mittleren Längsabschnitt einer elektrisch angetriebenen Fahrzeugachse. Nicht dargestellt sind die zu beiden Seiten hin weiter fahrzeugaußen angeordneten Abschnitte und Einzelteile der Fahrzeugachse. Hierzu gehören zum Beispiel die sich fahrzeugaußen anschließenden Achsschenkel der Fahrzeugachse, auf denen die Radnaben mit den Fahrzeugrädern drehbar gelagert sind. In Fig. 1 wiedergegebene Rohrabschnitte 2 gehören jeweils zu einer Antriebswelle, über welche das Antriebsmoment zu dem jeweiligen Fahrzeugrad gelangt.

In Fig. 1 dargestellt ist der Mittelbereich der elektrischen Achse, der sich gehäusemäßig vor allem zusammensetzt aus einem Antriebsgehäuse 3, in dem sich zwei Elektroantriebe befinden, einem ersten Getriebegehäuse 3A am einen Ende des Antriebsgehäuses 3, und einem zweiten Getriebegehäuse 3B am anderen Ende des Antriebsgehäuses 3. In den Getriebegehäusen 3A, 3B befinden sich die Getriebe und vorzugsweise Planetengetriebe, über die die Kraft von den Elektroantrieben 5A, 5B zu den an den Rohrabschnitten 2 erkennbaren Antriebswellen gelangt.

Das Antriebsgehäuse 3 besteht überwiegend aus einem Gehäusemantel 4, der im Wesentlichen zylindrisch gestaltet ist. An beiden Stirnseiten ist das Antriebsgehäuse 3 durch daran angeschraubte Flansche verschlossen. Die Flansche sind bei dem hier beschriebenen Ausführungsbeispiel Bestandteile der jeweiligen Getriebegehäuse 3A, 3B.

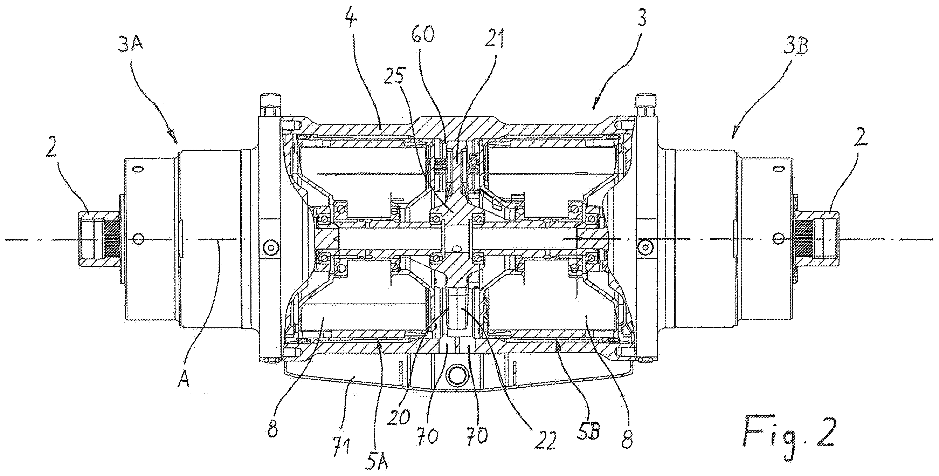

Gemäß Fig. 2 ist das Innere des Antriebgehäuses 3 im Wesentlichen zweigeteilt mit einem die eine Hälfte des Antriebsgehäuses 3 beanspruchenden, ersten Elektroantrieb 5A, und einem die andere Hälfte des Antriebsgehäuses 3 beanspruchenden, zweiten Elektroantrieb 5B. Die Drehachsen A beider Elektroantriebe 5A, 5B fluchten, ohne miteinander gekoppelt zu sein. Beide Elektroantriebe 5A, 5B befinden sich daher in dem Gehäusemantel 4 und damit innerhalb des gemeinsamen Antriebsgehäuses 3, sie sind jedoch ansonsten voneinander unabhängig und dementsprechend mit jeweils eigenen Rotorwellen 8A, 8B versehen. Deren erste Wellenenden führen einander abgewandt zu dem jeweiligen Getriebe. Die beiden anderen, also die einander zugewandten bzw. einander benachbarten Wellenenden 10A, 10B der Rotorwellen 8A, 8B sind, ohne mechanisch gekoppelt zu sein, beide in einem gemeinsamen Lagergehäuse 25 drehgelagert.

Die Fig. 2 zeigt ferner den Stator der Elektroantriebe 5A, 5B sowie jeweils den Rotor 8, welcher drehfest mit seiner jeweiligen Rotorwelle 8A, 8B ist. Beide Rotorwellen drehen sich auf derselben Drehachse, d. h. die Drehachsen A der Rotorwellen fluchten zueinander und sie erstrecken sich beide in Längsrichtung des Antriebsgehäuses 3.

Die beiden Elektroantriebe 5A, 5B arbeiten also unabhängig voneinander, was nicht ausschließt, dass sie z. B. synchronisiert betrieben werden können.

Genau in der Mitte zwischen den beiden Elektroantrieben 5A, 5B befindet sich in dem Antriebsgehäuse 3 ein quer zu den Drehachsen A angeordnetes Lagerschild 20. Bestandteile des Lagerschilds 20 sind das bereits erwähnte, die Wellenenden 10A, 10B drehbar lagernde Lagergehäuse 25 sowie mehrere Streben 21, 22, 23. Die Streben 21, 22, 23 erstrecken sich von dem Lagergehäuse 25 vorzugsweise radial nach außen. Gemeinsam bilden die Streben 21, 22, 23 einen Verbindungsbereich, der das zentral angeordnete Lagergehäuse 25 starr mit dem im Wesentlichen zylindrischen Gehäusemantel 4 des Antriebsgehäuses 3 verbindet.

Das Lagerschild 20 hat mehrere Funktionen. Eine erste Funktion besteht darin, das Lagergehäuse 25 innerhalb des Antriebsgehäuses 3 so starr zu positionieren, dass die einander benachbarten Wellenenden 10A, 10B der Rotorwellen 8A, 8B definiert drehgelagert sind. Eine weitere Funktion des Lagerschilds 20 besteht darin, einen Beitrag zur Festigkeit und Statik des Antriebsgehäuses 3 zu leisten. Dies insbesondere deshalb, da das Antriebsgehäuse 3 insgesamt rohrförmig gestaltet ist mit offenen Stirnseiten, die nur durch die Getriebegehäuse abgedeckt sind. Eine weitere Funktion des Lagerschilds 20 besteht darin, Kühlmittelkanäle aufzunehmen, über die Kühlflüssigkeit insbesondere zu den Antriebskomponenten gelangen kann.

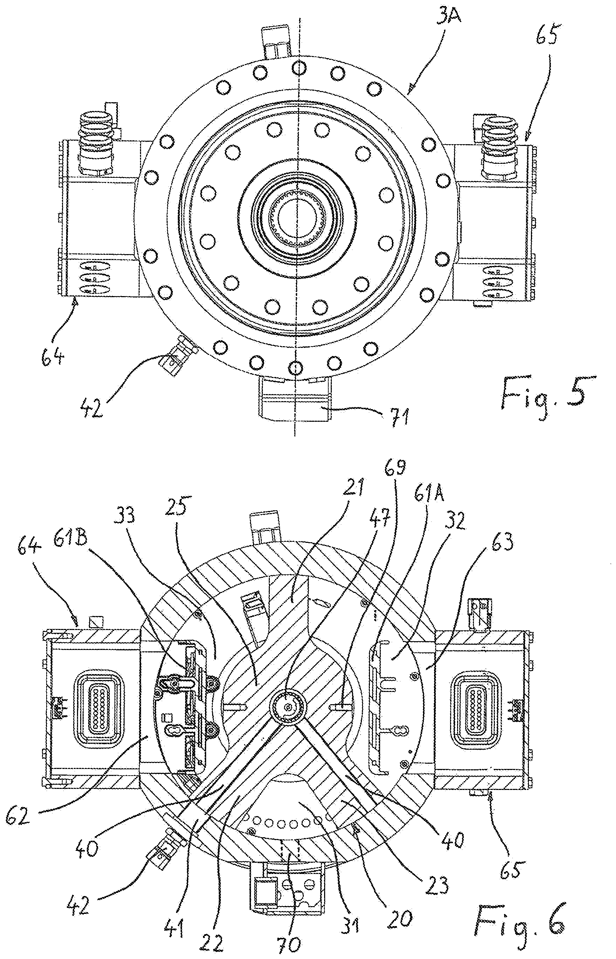

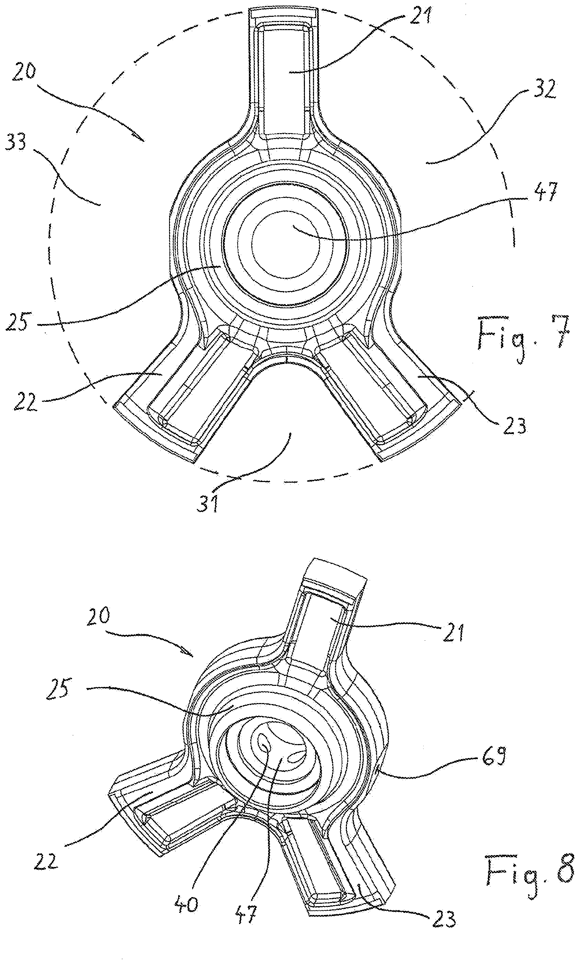

Gemäß den Figuren 6 - 8 ist das Lagerschild 20 keine geschlossene Platte, sondern das Lagerschild 20 besteht vor allem aus den bereits erwähnten Streben 21, 22, 23, die sich von dem zentral in dem Lagerschild 20 angeordneten Lagergehäuse 25 vorzugsweise radial nach außen erstrecken. Nur die diskreten Streben 21, 22, 23 bilden den Verbindungsbereich, über den das Lagergehäuse 25 mit dem Gehäusemantel 4 in Verbindung steht.

Indem das Lagerschild 20 kein vollflächiges Bauteil ist, verbleiben zwischen den Streben gleich viele Öffnungen 31, 32, 33, und damit Hohlräume. Die Öffnungen 31, 32, 33 bzw. Hohlräume bieten Platz für Kühlmaßnahmen und zum Unterbringen elektrischer Anschlussleisten. Sie bieten damit Platz insbesondere für solche Maßnahmen, die ansonsten zusätzlichen Bauraum in dem Antriebsgehäuse 3 beanspruchen würden.

Für die Stabilität des Lagerschilds 20 und damit die angestrebte Festigkeit des Antriebsgehäuses 3 ist es auch nicht notwendig, dass das Lagerschild 20 eine vollflächige Platte ist. Auch das Lagerschild 20 mit einem Verbindungsbereich aus diskreten Streben 21, 22, 23 ermöglicht eine ausreichende Aussteifung und leistet damit einen Beitrag zur Festigkeit des Antriebsgehäuses 3 insgesamt.

Gemäß den Figuren 6 - 8 verfügt das Lagerschild 20 vorzugsweise über insgesamt drei Streben 21, 22, 23. Diese sind so zueinander angeordnet, dass sie, in einer Ansicht längs der Drehachse A, gemeinsam ein auf dem Kopf stehendes "Y" wiedergeben. Denn der Winkelabstand zwischen den beiden Streben 22, 23 ist geringer, als der Winkelabstand jeder dieser beiden Streben 22, 23 zu der Strebe 21. Nachfolgend wird die Strebe 21, welche sich bei im Fahrzeug montierter Antriebsachse nach oben erstreckt, als die erste Strebe bezeichnet, und die im Fahrzeug nach schräg unten weisenden Streben 22 und 23 werden als zweite Strebe bzw. dritte Strebe bezeichnet.

Zwischen der zweiten Strebe 22 und der dritten Strebe 23 befindet sich eine erste Öffnung 31 in Gestalt eines Öffnungssegments. Zwischen der ersten Strebe 21 und der zweiten Strebe 22 befindet sich eine Öffnung 33 in Gestalt ebenfalls eines Öffnungssegments. Zwischen der ersten Strebe 21 und der dritten Strebe 23 befindet sich eine Öffnung 32 in Gestalt ebenfalls eines Öffnungssegments.

Beim Ausführungsbeispiel sind die Öffnungen bzw. Öffnungssegmente 32, 33 von gleicher Größe, hingegen ist die bei montierter Fahrzeugachse unten liegende Öffnung 31 wegen des geringeren Winkels zwischen den Streben 22, 23 von geringerer Öffnungsfläche.

Die Streben 21, 22, 23 sind, in Umfangsrichtung des Lagerschilds, von unterschiedlicher Breite. Die Breite der zwei Streben 22, 23, durch die jeweils ein Kühlmittelkanal 40 verläuft, ist größer als die Breite der ersten Strebe 21, durch die kein Kühlmittelkanal verläuft. Solche Querschnitte der Streben, in denen kein Kühlmittelkanal 40 verläuft, können außerdem von geringerer Dicke sein. Zum Beispiel können die Streben in diesen nicht für Kühlzwecke genutzten Querschnitten mit gewichtsreduzierenden Ausnehmungen versehen sein.

Der in der Strebe 22 und/oder in der Strebe 23 verlaufende Kühlmittelkanal 40 reicht von dem Lagergehäuse 25, in dessen Inneres er mündet, bis zu einer Kühlmittelöffnung 41, mit der der Gehäusemantel 4 in Verlängerung der Strebe versehen ist. Die Kühlmittelöffnung 41 ist eine Gewindebohrung radial in dem Gehäusemantel 4. Der Querschnitt der Kühlmittelöffnung 41 ist größer als der Querschnitt des in der Strebe 22, 23 verlaufenden Kühlmittelkanals 40, so dass ohne Kühlmittel-Druckverlust in diese Gewindebohrung ein Kühlmittel-Anschlussstutzen 42 eingeschraubt sein kann. Über den Kühlmittel-Anschlussstutzen 42 wird Kühlmittel eingespeist, welches dann über den Kühlmittelkanal 40 in das Zentrum des Lagergehäuses 25 gelangt, um die dort angeordneten Wälzlager 45A, 45B der Rotorwellen zu kühlen.

Das Lagergehäuse 25 ist in Längsrichtung des Antriebsgehäuses 3 breiter als die Breite bzw. Dicke der Streben 21, 22, 23. Das Lagergehäuse 25 ist auf der Drehachse A mit einer Durchgangsöffnung 47 versehen, die sich aus mehreren Längsabschnitten zusammensetzt. Die beiden äußeren Längsabschnitte der Durchgangsöffnung 47 sind Lageraufnahmen, in denen die Außenringe der die Rotorwellen 8A, 8B lagernden Wälzlager 45A, 45B sitzen. In dem mittleren Längsabschnitt der Durchgangsöffnung 47 mündet der Kühlmittelkanal 40. Zwischen den genannten Längsabschnitten befindet sich jeweils ein weiterer, kurzer Längsabschnitt, der als Kühlmittelzuführung zu den Wälzlagern 45A bzw. 45B dient. Über diese Kühlmittelzuführung, welche jeweils zwischen dem Innenring und dem Außenring der Wälzlager 45A, 45B mündet, gelangt ein Teil des über den Kühlmittelkanal 40 in die Durchgangsöffnung 47 einströmenden Kühlmittels in den Bereich der Wälzkörper der Wälzlager 45A, 45B.

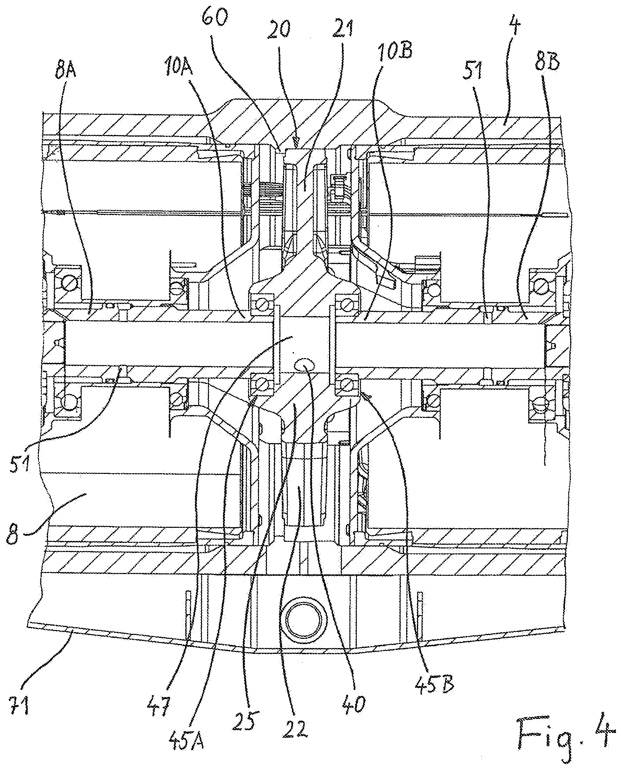

Gemäß Fig. 4 sind die beiden Rotorwellen 8A, 8B auf zumindest einem Teil ihrer Länge Hohlwellen, die einander zugewandt offen sind. Ein anderer Teil des über den Kühlmittelkanal 40 in die Durchgangsöffnung 47 einströmenden Kühlmittels kann daher in die Rotorwellen 8A, 8B einströmen, und von dort über in den Rotorwellen 8A, 8B ausgebildete Querbohrungen 51 in den Rotor 8 des jeweiligen Elektroantriebs gelangen.

Zum Verstreben des Antriebsgehäuses 3 sind die Streben 21, 22, 23 mit ihren äußeren Enden radial gegen den Gehäusemantel 4 abgestützt. Zusätzlich ist jede Strebe 21, 22, 23 axial gegen eine Rippe 60 abgestützt, die innen an dem Gehäusemantel 4 einstückig ausgebildet ist. Durch das axiale Abstützen gegen die Rippe 60 ist die Längsposition des Lagerschilds 20 innerhalb des Antriebsgehäuses 3 eindeutig festgelegt.

Die Rippe 60 ist hier allerdings keine über den gesamten Umfang des Gehäusemantels 4 durchgehende Rippe, sondern sie setzt sich in Umfangsrichtung aus einzelnen, getrennten Rippensegmenten zusammen. Die Rippensegmente befinden sich vorzugsweise nur auf jenen Umfangsabschnitten des Gehäusemantels 4, auf denen sich auch die äußeren Enden der Streben 21, 22, 23 befinden.

Da sich die Rippe 60 aus einzelnen Rippensegmenten zusammensetzt, kann der Gehäusemantel 4 auf den Umfangsabschnitten ohne Rippensegmente mit z. B. Fenstern, Öffnungen oder dergleichen Durchbrüchen versehen sein. Beim Ausführungsbeispiel wird dies dazu genutzt, in dem Gehäusemantel im Bereich der zweiten Öffnung 32 und im Bereich der dritten Öffnung 33 jeweils ein Fenster 62, 63 auszubilden.

Durch das Fenster 62, 63 und durch die zweite Öffnung 32 bzw. die dritte Öffnung 33 führen Elektroleitungen zu Anschlussleisten 61A, 61B der Elektroantriebe 5A, 5B. Die beiden Anschlussleisten 61A, 61B sind innerhalb des Gehäusemantels 4 auf unterschiedlichen, nämlich auf einander gegenüberliegenden Umfangsabschnitten angeordnet. Dementsprechend sind auch die zwei Fenster 62, 63 auf einander gegenüberliegenden Umfangsabschnitten im Gehäusemantel 4 ausgebildet.

Außen sind die Fenster 62, 63 jeweils durch einen Schutzkasten 64, 65 abgedeckt. In dem Schutzkasten 65 befinden sich elektrische Verbindungsklemmen 59, von denen Elektroleitungen zu der Anschlussleiste 61A des ersten Elektroantriebs 5A führen. Der Masseleiter der Elektroleitung ist in einem Gewindeloch 69 des Lagergehäuses 25 kontaktiert. Auch in dem anderen Schutzkasten 64 befinden sich elektrische Verbindungsklemmen 59, von denen Elektroleitungen zu der Anschlussleiste 61B des zweiten Elektroantriebs 5B führen. Wiederum ist der Masseleiter der Elektroleitung in einem Gewindeloch in dem Lagergehäuse 25 kontaktiert.

Die Anschlussleiste 61A des ersten Elektroantriebs 5A erstreckt sich bis in die Öffnung 32 hinein, und die Anschlussleiste 61B des zweiten Elektroantriebs 5A erstreckt sich bis in die Öffnung 33 hinein. Für eine besonders kompakte Anordnung erstrecken sich die beiden Anschlussleisten 61A, 61B so weit in die jeweiligen Öffnungen 32, 33 hinein, dass sich die Anschlussleisten 61A, 61B in Längsrichtung des Antriebsgehäuses 3 teilweise überlappen.

Die Schutzkästen 64, 65 sind, um die elektrische Antriebseinheit innerhalb des umgebenden Fahrzeugs kompakt zu halten, derart gestaltet, dass die Haupterstreckung der Schutzkästen 64, 65 parallel zu den Drehachsen A ist (Fig. 1). Vorzugsweise erstrecken sich die Schutzkästen 64, 65 in eine Richtung, so dass elektrische Anschlusskabel auf einer einzigen Fahrzeugseite verlegt werden können.

Auf dem Längsabschnitt des Antriebsgehäuses 3, auf dem sich der Lagerschild 20 befindet, ist der Gehäusemantel 4 an seiner am tiefsten gelegenen Stelle mit einer oder mit mehreren Kühlmittelöffnungen 70 versehen. Aufgrund dieser Position der Kühlmittelöffnung 70 verbindet diese die zwischen den Streben 22, 23 angeordnete erste Öffnung 31 mit einer außen an dem Gehäusemantel 4 angeordneten Kühlmittelwanne 71. Kühlmittel kann daher über die Kühlmittelöffnung 70 in die am tiefsten Ort der Antriebseinheit angeordnete Kühlmittelwanne 71 abfließen, und sich dort sammeln.

Als Kühlmittel geeignet ist, da dieses auch Teile der elektrischen Motoren durchströmt, vor allem ein Kühlöl. Dieses sollte von solcher Spezifikation sein, dass es außerdem gute Schmiereigenschaften bei der Schmierung der Wälzlager 45A, 45B und der weiteren Wälzlager der Antriebseinheit hat.

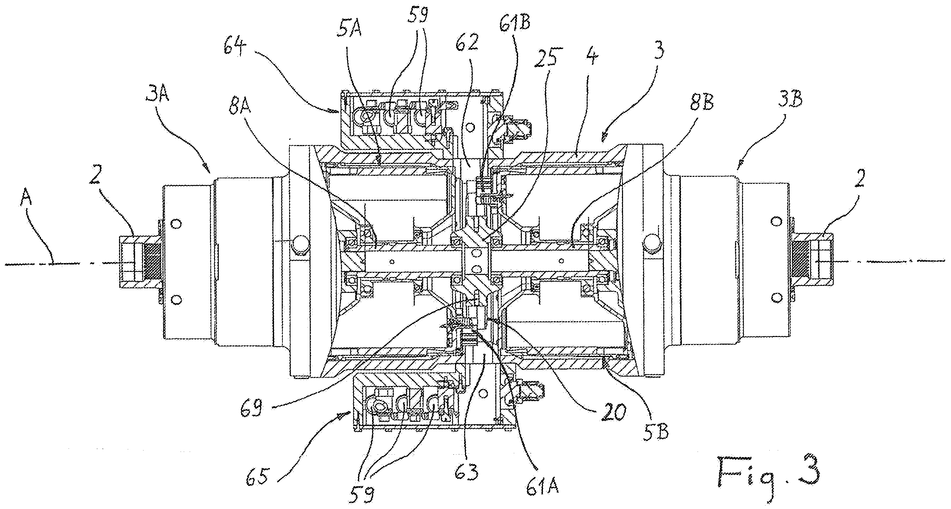

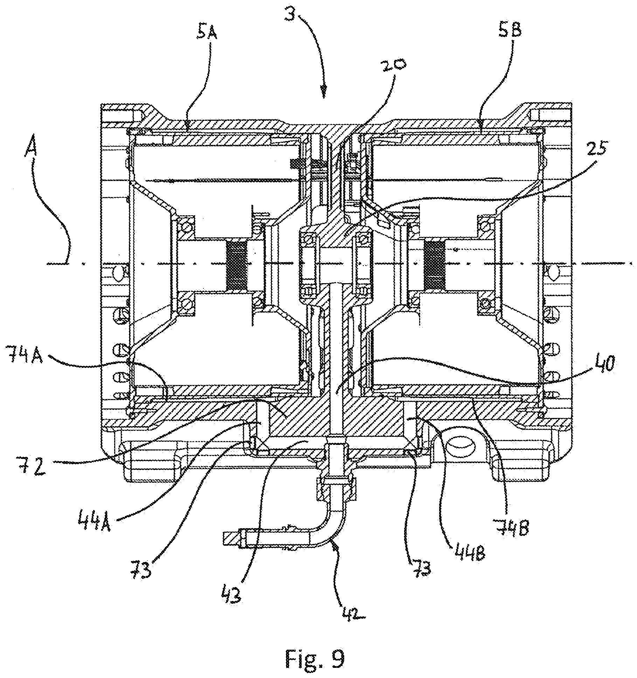

Figur 9 stellt eine nicht zur Erfindung gehörende Ausführungsform des Antriebsgehäuses 3 dar, wobei die Rotorwellen in dieser Zeichnung nicht dargestellt sind. Gemäß der Figur 9 sind das Lagerschild 20, das Lagergehäuse 25 und das Antriebsgehäuse 3 einteilig aus Guss hergestellt, wobei ihr struktureller Aufbau dem mehrteiligen Systems gemäß der Figuren 2 bis 6 im zusammengebauten Zustand gleicht.

Des Weiteren ist außenseitig am Antriebsgehäuse 3, im Bereich des Kühlmittelkanals 40, ein Verteilerbock 72 ausgebildet, wobei auch der Verteilerbock 72 einteilig an dem Antriebsgehäuse 3 ausgebildet ist. Der Verteilerbock 72 weist neben dem Kühlmittelkanal 40 noch drei weitere Bohrungen auf, wobei die erste Bohrung 43 parallel zur Drehachse A durch den Verteilerbock 72 verläuft. Die zweite und dritte Bohrung 44A, 44B erstrecken sich parallel links und rechts zu dem Kühlmittelkanal 40, wobei sie die erste Bohrung 43 schneiden und die Außenwand des Antriebsgehäuses 3 durchstoßen. Aus fertigungstechnischen Gründen sind die erste, zweite und dritte Bohrung 43. 44A, 44B als Durchgangsbohrungen ausgebildet, wobei die Bohrungsöffnungen an der Außenseite des Verteilerbocks 72 nachträglich durch Stopfen 73 dicht verschlossen werden.

Die erste, zweite und dritte Bohrung 43, 44A, 44B sind dazu eigerichtet, Kühlmittel vom Kühlmittelkanal 40 abzuführen und dieses in einen Ringspalt 74A, 74B umzuleiten, der den Stator außenseitig umgibt. Über nicht dargestellte Zugangsöffnungen, die den Stator ringförmig umgeben, wird das Kühlmittel in den Innenraum des Elektroantriebs 5A, 5B geleitet, wobei es wieder über eine nicht dargestellte Kühlmittelöffnung der ebenfalls nicht dargestellten Kühlmittelwanne zugeführt wird. Somit wird eine zusätzliche Kühlung der elektrischen Antriebseinheit ermöglicht.

### Bezugszeichenliste

- 2: Rohrabschnitt
- 3: Antriebsgehäuse
- 3A: Getriebegehäuse
- 3B: Getriebegehäuse
- 4: Gehäusemantel
- 5A: Elektroantrieb
- 5B: Elektroantrieb
- 8: Rotor
- 8A: Rotorwelle
- 8B: Rotorwelle
- 10A: Wellenende
- 10B: Wellenende

- 20: Lagerschild
- 21: Strebe
- 22: Strebe
- 23: Strebe
- 25: Lagergehäuse

- 31: Öffnung
- 32: Öffnung
- 33: Öffnung

- 40: Kühlmittelkanal
- 41: Kühlmittelöffnung
- 42: Kühlmittel-Anschlussstutzen
- 43: erste Bohrung
- 44A: zweite Bohrung
- 44B: dritte Bohrung
- 45A: Wälzlager
- 45B: Wälzlager
- 47: Durchgangsöffnung

- 51: Querbohrung
- 59: Verbindungsklemme
- 60: Rippe
- 61A: Anschlussleiste
- 61B: Anschlussleiste
- 62: Fenster
- 63: Fenster
- 64: Schutzkasten
- 65: Schutzkasten
- 68: Elektroleitung
- 69: Gewindeloch für Masseleiter

- 70: Kühlmittelöffnung
- 71: Kühlmittelwanne
- 72: Verteilerbock
- 73: Stopfen
- 74A: Ringspalt
- 74B: Ringspalt

- A: Drehachse

## Patentansprüche

1. Elektrische Antriebseinheit für ein Kraftfahrzeug, mit zwei Elektroantrieben (5A, 5B), die in einem Gehäusemantel (4) eines gemeinsamen Antriebsgehäuses (3) angeordnet sind und jeweils einen Stator und einen mit einer Rotorwelle (8A, 8B) drehenden Rotor (8) umfassen, wobei einander benachbarte Wellenenden (10A, 10B) der Rotorwellen (8A, 8B) beide in einem Lagergehäuse (25) drehgelagert sind, welches der zentrale Bereich eines starr in dem Antriebsgehäuse (3) angeordneten Lagerschilds (20) ist, **dadurch gekennzeichnet, dass** Bestandteile des Lagerschilds (20) mindestens drei Streben (21, 22, 23) sind, die sich von dem Lagergehäuse (25) nach außen erstrecken, das Lagergehäuse (25) mit dem Gehäusemantel (4) des Antriebsgehäuses (3) verbinden, und an dem Lagerschild (20) eine gleiche Anzahl von Öffnungen (31, 32, 33) in Gestalt von um das Lagergehäuse (25) herum angeordneten Öffnungssegmenten unterteilen, wobei sich eine erste Öffnung (31) der Öffnungen im Antriebsgehäuse (3) unten befindet, eine unten im Gehäusemantel (4) des Antriebsgehäuses (3) ausgebildete Kühlmittelöffnung (70) in die erste Öffnung (31) radial einmündet, und die Kühlmittelöffnung (70) die erste Öffnung (31) mit einer außen an dem Gehäusemantel (4) angeordneten Kühlmittelwanne (71) verbindet.

2. Elektrische Antriebseinheit nach Anspruch 1, **dadurch gekennzeichnet, dass** ausschließlich die Streben (21, 22, 23) mit ihren äußeren Enden den Außenumfang des Lagerschilds (20) bilden und das Lagerschild (20) mit dem Gehäusemantel (4) verbinden.

3. Elektrische Antriebseinheit nach Anspruch 1, **dadurch gekennzeichnet, dass** die erste Öffnung (31) kleiner als jede der weiteren Öffnungen (32, 33) ist.

4. Elektrische Antriebseinheit nach Anspruch 3, **dadurch gekennzeichnet, dass** die weiteren Öffnungen (32, 33) von gleicher Größe sind.

5. Elektrische Antriebseinheit nach einem der vorangehenden Ansprüche, **dadurch gekennzeichnet, dass** durch zumindest eine Strebe (22, 23) ein Kühlmittelkanal (40) verläuft, welcher von einer Kühlmittelöffnung (41), mit der der Gehäusemantel (4) in Verlängerung der Strebe (22, 23) versehen ist, bis in das Lagergehäuse (25) führt.

6. Elektrische Antriebseinheit nach Anspruch 5, **dadurch gekennzeichnet, dass** die Kühlmittelöffnung (41) eine Gewindebohrung ist, deren Querschnitt größer als der Querschnitt des in der Strebe (22, 23) verlaufenden Kühlmittelkanals (40) ist, und dass in die Gewindebohrung ein Kühlmittel-Anschlussstutzen (42) eingeschraubt ist.

7. Elektrische Antriebseinheit nach Anspruch 5 oder 6, **dadurch gekennzeichnet, dass** die Streben, in Umfangsrichtung des Lagerschilds (20) betrachtet, von unterschiedlicher Breite sind, und dass die Breite der Strebe (22, 23), durch die der Kühlmittelkanal (40) verläuft, größer ist als die Breite einer Strebe (21) ohne darin verlaufenden Kühlmittelkanal.

8. Elektrische Antriebseinheit nach einem der Ansprüche 5 - 7, **dadurch gekennzeichnet, dass** in dem Lagergehäuse (25) getrennte Wälzlager (45A, 45B) für die Wellenenden (10A, 10B) der beiden Rotorwellen (8A, 8B) angeordnet sind, dass jedes Wälzlager (45A, 45B) mit seinem Innenring das jeweilige Wellenende (10A, 10B) umschließt und mit seinem Außenring in dem Lagergehäuse (25) abgestützt ist, und dass das Lagergehäuse (25) mit einer zentral darin angeordneten Durchgangsöffnung (47) versehen ist, in die sich die Wellenenden (10A, 10B) erstrecken und in die der Kühlmittelkanal (40) einmündet.

9. Elektrische Antriebseinheit für ein Kraftfahrzeug, mit zwei Elektroantrieben (5A, 5B), die in einem Gehäusemantel (4) eines gemeinsamen Antriebsgehäuses (3) angeordnet sind und jeweils einen Stator und einen mit einer Rotorwelle (8A, 8B) drehenden Rotor (8) umfassen, wobei einander benachbarte Wellenenden (10A, 10B) der Rotorwellen (8A, 8B) beide in einem Lagergehäuse (25) drehgelagert sind, welches der zentrale Bereich eines starr in dem Antriebsgehäuse (3) angeordneten Lagerschilds (20) ist, **dadurch gekennzeichnet, dass** Bestandteile des Lagerschilds (20) mindestens drei Streben (21, 22, 23) sind, die sich von dem Lagergehäuse (25) nach außen erstrecken, das Lagergehäuse (25) mit dem Gehäusemantel (4) des Antriebsgehäuses (3) verbinden, und an dem Lagerschild (20) eine gleiche Anzahl von Öffnungen (31, 32, 33) in Gestalt von um das Lagergehäuse (25) herum angeordneten Öffnungssegmenten unterteilen, und dass in dem Gehäusemantel (4) im Bereich zweier Öffnungen (32,33) jeweils ein Fenster (62, 63) ausgebildet ist, durch welches und durch die jeweilige Öffnung (32, 33) Elektroleitungen zu den Elektroantrieben (5A, 5B) führen.

10. Elektrische Antriebseinheit nach Anspruch 9, **dadurch gekennzeichnet, dass** die Fenster (62, 63) auf einander abgewandten Umfangsabschnitten des Gehäusemantels (4) angeordnet sind, dass die Fenster (62, 63) außen durch Schutzkästen (64, 65) abgedeckt sind, und dass sich in den Schutzkästen (64, 65) elektrische Verbindungsklemmen (59) befinden, an die die Elektroleitungen angeschlossen sind.

11. Elektrische Antriebseinheit nach Anspruch 10, **dadurch gekennzeichnet, dass** die Haupterstreckung der Schutzkästen (64, 65) parallel zur Längsrichtung des Antriebsgehäuses (3) ist.

12. Elektrische Antriebseinheit nach einem der Ansprüche 9 - 11, **dadurch gekennzeichnet, dass** erste Elektroleitungen zu einer an dem ersten Elektroantrieb (5A) angebrachten ersten Anschlussleiste (61A) führen, die sich in die eine Öffnung (32) hinein erstreckt, und dass zweite Elektroleitungen zu einer an dem zweiten Elektroantrieb (5B) angebrachten zweiten Anschlussleiste (61B) führen, die sich in die andere Öffnung (33) hinein erstreckt.

13. Elektrische Antriebseinheit nach Anspruch 12, **dadurch gekennzeichnet, dass** sich die Anschlussleisten (61A, 61B) so weit in die Öffnungen (32, 33) hinein erstrecken, dass sich die Anschlussleisten (61A, 61B) in Längsrichtung des Antriebsgehäuses (3) teilweise überlappen.

14. Elektrische Antriebseinheit nach einem der vorangehenden Ansprüche, **dadurch gekennzeichnet, dass** jede Strebe (21, 22, 23) axial gegen eine von dem Gehäusemantel (4) nach innen ragende Rippe (60) abgestützt ist.

15. Elektrische Antriebseinheit nach Anspruch 14, **dadurch gekennzeichnet, dass** die Rippe (60) einstückiger Bestandteil des Gehäusemantels (4) ist.

16. Elektrische Antriebseinheit nach Anspruch 14 oder 15, **dadurch gekennzeichnet, dass** sich die Rippe (60) in Umfangsrichtung aus einzelnen, getrennten Rippensegmenten zusammensetzt, und dass die Rippensegmente nur auf Umfangsabschnitten des Gehäusemantels (4) angeordnet sind, auf denen sich die Streben (21, 22, 23) befinden.

17. Elektrische Antriebseinheit nach Anspruch 16, **dadurch gekennzeichnet, dass** der Gehäusemantel (4) auf den Umfangsabschnitten ohne Rippensegmente mit Fenstern (62, 63), Öffnungen oder dergleichen Durchbrüchen versehen ist.

18. Elektrische Antriebseinheit nach Anspruch 1, **gekennzeichnet durch** eine Anordnung des Lagerschilds (20) in dem Antriebsgehäuse (3) derart, dass das Lagerschild (20) zu jedem der beiden Elektroantriebe (5A, 5B) den gleichen axialen Abstand hat.

19. Elektrische Antriebseinheit nach Anspruch 1, **dadurch gekennzeichnet, dass** die beiden Rotorwellen (8A, 8B) zueinander fluchtende Drehachsen (A) aufweisen.

## Claims

1. Electric drive unit for a motor vehicle, comprising two electric drives (5A, 5B), which are arranged in a housing casing (4) of a common drive housing (3) and each comprise a stator and a rotor (8) that rotates with a rotor shaft (8A, 8B), adjacent shaft ends (10A, 10B) of the rotor shafts (8A, 8B) both being rotatably mounted in a bearing housing (25) which is the central region of a bearing plate (20) arranged rigidly in the drive housing (3), **characterized in that** components of the bearing plate (20) are at least three struts (21, 22, 23), which extend outward from the bearing housing (25), connect the bearing housing (25) to the housing casing (4) of the drive housing (3), and, at the bearing plate (20), divide an identical number of openings (31, 32, 33) in the form of opening segments arranged around the bearing housing (25), a first opening (31) of the openings in the drive housing (3) being located at the bottom, a coolant opening (70) formed at the bottom in the housing casing (4) of the drive housing (3) opening radially into the first opening (31), and the coolant opening (70) connecting the first opening (31) to a coolant trough (71) arranged on the outside of the housing casing (4).

2. Electric drive unit according to claim 1, **characterized in that** only the struts (21, 22, 23) form, by their outer ends, the outer periphery of the bearing plate (20) and connect the bearing plate (20) to the housing casing (4).

3. Electric drive unit according to claim 1, **characterized in that** the first opening (31) is smaller than each of the further openings (32, 33).

4. Electric drive unit according to claim 3, **characterized in that** the further openings (32, 33) are of the same size.

5. Electric drive unit according to any of the preceding claims,
**characterized in that** a coolant channel (40) extends through at least one strut (22, 23) and leads into the bearing housing (25) from a coolant opening (41) with which the housing casing (4) is provided in an extension of the strut (22, 23).

6. Electric drive unit according to claim 5, **characterized in that** the coolant opening (41) is a threaded hole, the cross section of which is larger than the cross section of the coolant channel (40) extending in the strut (22, 23), and **in that** a coolant connection piece (42) is screwed into the threaded hole.

7. Electric drive unit according to claim 5 or 6, **characterized in that** the struts, viewed in the circumferential direction of the bearing plate (20), are of different widths, and **in that** the width of the strut (22, 23) through which the coolant channel (40) extends is greater than the width of a strut (21) without a coolant channel extending therein.

8. Electric drive unit according to any of claims 5 to 7, **characterized in that** separate roller bearings (45A, 45B) for the shaft ends (10A, 10B) of the two rotor shafts (8A, 8B) are arranged in the bearing housing (25), **in that** each roller bearing (45A, 45B) encloses the respective shaft end (10A, 10B) by its inner ring and is supported by its outer ring in the bearing housing (25), and **in that** the bearing housing (25) is provided with a through opening (47) arranged centrally therein, into which the shaft ends (10A, 10B) extend and into which the coolant channel (40) opens.

9. Electric drive unit for a motor vehicle, comprising two electric drives (5A, 5B), which are arranged in a housing casing (4) of a common drive housing (3) and each comprise a stator and a rotor (8) that rotates with a rotor shaft (8A, 8B), adjacent shaft ends (10A, 10B) of the rotor shafts (8A, 8B) both being rotatably mounted in a bearing housing (25) which is the central region of a bearing plate (20) arranged rigidly in the drive housing (3), **characterized in that** components of the bearing plate (20) are at least three struts (21, 22, 23), which extend outward from the bearing housing (25), connect the bearing housing (25) to the housing casing (4) of the drive housing (3), and, at the bearing plate (20), divide an identical number of openings (31, 32, 33) in the form of opening segments arranged around the bearing housing (25), and **in that** a window (62, 63) is formed in each case in the housing casing (4) in the region of two openings (32, 33), through which window and through the respective opening (32, 33) electrical lines lead to the electric drives (5A, 5B).

10. Electric drive unit according to claim 9, **characterized in that** the windows (62, 63) are arranged on circumferential portions of the housing casing (4) facing away from one another, **in that** the windows (62, 63) are covered externally by protective boxes (64, 65), and **in that** electrical connection terminals (59), to which the electrical lines are connected, are located in the protective boxes (64, 65).

11. Electric drive unit according to claim 10, **characterized in that** the main extension of the protective boxes (64, 65) is parallel to the longitudinal direction of the drive housing (3).

12. Electric drive unit according to any of claims 9 to 11, **characterized in that** first electric lines lead to a first terminal block (61A), which is attached to the first electric drive (5A) and extends into one opening (32), and **in that** second electric lines lead to a second terminal block (61B), which is attached to the second electric drive (5B) and extends into the other opening (33).

13. Electric drive unit according to claim 12, **characterized in that** the terminal blocks (61A, 61B) extend into the openings (32, 33) far enough for the terminal blocks (61A, 61B) to partially overlap in the longitudinal direction of the drive housing (3).

14. Electric drive unit according to any of the preceding claims,
**characterized in that** each strut (21, 22, 23) is axially supported against a rib (60) projecting inward from the housing casing (4).

15. Electric drive unit according to claim 14, **characterized in that** the rib (60) is an integral component of the housing casing (4).

16. Electric drive unit according to claim 14 or 15, **characterized in that** the rib (60) is composed of individual, separate rib segments in the circumferential direction, and **in that** the rib segments are arranged only on circumferential portions of the housing casing (4) on which the struts (21, 22, 23) are located.

17. Electric drive unit according to claim 16, **characterized in that** the housing casing (4) is provided with windows (62, 63), openings or similar openings on the peripheral portions without rib segments.

18. Electric drive unit according to claim 1, **characterized by** an arrangement of the bearing plate (20) in the drive housing (3) such that the bearing plate (20) has the same axial distance from each of the two electric drives (5A, 5B).

19. Electric drive unit according to claim 1, **characterized in that** the two rotor shafts (8A, 8B) have axes of rotation (A) that are aligned with one another.

## Revendications

1. Unité d'entraînement électrique pour un véhicule à moteur, avec deux entraînements électriques (5A, 5B), qui sont disposés dans une enveloppe de carter (4) d'un carter d'entraînement (3) commun et comprennent respectivement un stator et un rotor (8) tournant avec un arbre de rotor (8A, 8B), dans laquelle les extrémités d'arbre (10A, 10B) voisines l'une de l'autre des arbres de rotor (8A, 8B) sont toutes les deux montées en rotation dans un carter de palier (25), lequel est la zone centrale d'un flasque (20) disposé fixement dans le carter d'entraînement (3), **caractérisée en ce que** des composants du flasque (20) sont au moins trois traverses (21, 22, 23), qui s'étendent vers l'extérieur à partir du carter de palier (25), relient le carter de palier (25) à l'enveloppe de carter (4) du carter d'entraînement (3), et sur le flasque (20) subdivisent un nombre identique d'ouvertures (31, 32, 33) sous forme de segments d'ouverture disposés autour du carter de palier (25), dans laquelle une première ouverture (31) des ouvertures se trouve en bas dans le carter d'entraînement (3), une ouverture de réfrigérant (70) réalisée en bas dans l'enveloppe de carter (4) du carter d'entraînement (3) débouche radialement dans la première ouverture (31), et l'ouverture de réfrigérant (70) relie la première ouverture (31) à une cuve de réfrigérant (71) disposée à l'extérieur sur l'enveloppe de carter (4).

2. Unité d'entraînement électrique selon la revendication 1, **caractérisée en ce que** seules les traverses (21, 22, 23) avec leurs extrémités extérieures forment la périphérie extérieure du flasque (20) et relient le flasque (20) à l'enveloppe de carter (4).

3. Unité d'entraînement électrique selon la revendication 1, **caractérisée en ce que** la première ouverture (31) est plus petite que chacune des autres ouvertures (32, 33) .

4. Unité d'entraînement électrique selon la revendication 3, **caractérisée en ce que** les autres ouvertures (32, 33) sont de même taille.

5. Unité d'entraînement électrique selon l'une quelconque des revendications précédentes, **caractérisée en ce qu'**un canal de réfrigérant (40), lequel mène d'une ouverture de réfrigérant (41), dont l'enveloppe de carter (4) est pourvue dans le prolongement de la traverse (22, 23), jusque dans le carter de palier (25), s'étend à travers au moins une traverse (22, 23).

6. Unité d'entraînement électrique selon la revendication 5, **caractérisée en ce que** l'ouverture de réfrigérant (41) est un trou taraudé, dont la section transversale est plus grande que la section transversale du canal de réfrigérant (40) s'étendant dans la traverse (22, 23), et qu'une tubulure de raccordement de réfrigérant (42) est vissée dans le trou taraudé.

7. Unité d'entraînement électrique selon la revendication 5 ou 6, **caractérisée en ce que** les traverses, vues dans la direction périphérique du flasque (20), sont de différente largeur, et que la largeur de la traverse (22, 23), à travers laquelle le canal de réfrigérant (40) s'étend, est plus grande que la largeur d'une traverse (21) sans canal de réfrigérant s'étendant dans celle-ci.

8. Unité d'entraînement électrique selon l'une quelconque des revendications 5 - 7, **caractérisée en ce que** des paliers à roulement (45A, 45B) séparés pour les extrémités d'arbre (10A, 10B) des deux arbre de rotor (8A, 8B) sont disposés dans le carter de palier (25), que chaque palier à roulement (45A, 45B) avec sa bague intérieure entoure l'extrémité d'arbre (10A, 10B) respective et avec sa bague extérieure est en appui dans le carter de palier (25), et que le carter de palier (25) est pourvu d'une ouverture de passage (47) disposée de manière centrale dans celui-ci, dans laquelle les extrémités d'arbre (10A, 10B) s'étendent et dans laquelle le canal de réfrigérant (40) débouche.

9. Unité d'entraînement électrique pour un véhicule à moteur, avec deux entraînements électriques (5A, 5B), qui sont disposés dans une enveloppe de carter (4) d'un carter d'entraînement (3) commun et comprennent respectivement un stator et un rotor (8) tournant avec un arbre de rotor (8A, 8B), dans laquelle les extrémités d'arbre (10A, 10B) voisines l'une de l'autre des arbres de rotor (8A, 8B) sont toutes les deux montées en rotation dans un carter de palier (25), lequel est la zone centrale d'un flasque (20) disposé fixement dans le carter d'entraînement (3), **caractérisée en ce que** des composants du flasque (20) sont au moins trois traverses (21, 22, 23), qui s'étendent vers l'extérieur à partir du carter de palier (25), relient le carter de palier (25) à l'enveloppe de carter (4) du carter d'entraînement (3), et sur le flasque (20) subdivisent un nombre identique d'ouvertures (31, 32, 33) sous forme de segments d'ouverture disposés autour du carter de palier (25), et que respectivement une fenêtre (62, 63), à travers laquelle et à travers l'ouverture (32, 33) respective des lignes électriques mènent aux entraînements électriques (5A, 5B), est réalisée dans l'enveloppe de carter (4) dans la zone de deux ouvertures (32, 33).

10. Unité d'entraînement électrique selon la revendication 9, **caractérisée en ce que** les fenêtres (62, 63) sont disposées sur des parties périphériques opposées les unes aux autres de l'enveloppe de carter (4), que les fenêtres (62, 63) sont recouvertes à l'extérieur par des caissons de protection (64, 65), et que des bornes de connexion électriques (59) auxquelles les lignes électriques sont raccordées se trouvent dans les caissons de protection (64, 65) .

11. Unité d'entraînement électrique selon la revendication 10, **caractérisée en ce que** l'étendue principale des caissons de protection (64, 65) est parallèle à la direction longitudinale du carter d'entraînement (3).

12. Unité d'entraînement électrique selon l'une quelconque des revendications 9 - 11, **caractérisée en ce que** les premières lignes électriques mènent à une première barrette de raccordement (61A) montée sur le premier entraînement électrique (5A), qui s'étend à l'intérieur de la une ouverture (32), et que des deuxièmes lignes électriques mènent à une deuxième barrette de raccordement (61B) montée sur le deuxième entraînement électrique (5B), qui s'étend à l'intérieur de l'autre ouverture (33).

13. Unité d'entraînement électrique selon la revendication 12, **caractérisée en ce que** les barrettes de raccordement (61A, 61B) s'étendent à l'intérieur des ouvertures (32, 33) à un point tel que les barrettes de raccordement (61A, 61B) se chevauchent en partie dans la direction longitudinale du carter d'entraînement (3).

14. Unité d'entraînement électrique selon l'une quelconque des revendications précédentes, **caractérisée en ce que** chaque traverse (21, 22, 23) est en appui axial contre une nervure (60) faisant saillie vers l'intérieur à partir de l'enveloppe de carter (4).

15. Unité d'entraînement électrique selon la revendication 14, **caractérisée en ce que** la nervure (60) fait partie intégrante de l'enveloppe de carter (4).

16. Unité d'entraînement électrique selon la revendication 14 ou 15, **caractérisée en ce que** la nervure (60) se compose dans la direction périphérique de segments de nervure individuels séparés, et que les segments de nervure ne sont disposés que sur des parties périphériques de l'enveloppe de carter (4) sur lesquelles se trouvent les traverses (21, 22, 23).

17. Unité d'entraînement électrique selon la revendication 16, **caractérisée en ce que** l'enveloppe de carter (4) est pourvue sur les parties périphériques sans segments de nervure de fenêtres (62, 63), d'ouvertures ou de percées similaires.

18. Unité d'entraînement électrique selon la revendication 1, **caractérisée par** une disposition du flasque (20) dans le carter d'entraînement (3) de telle sorte que le flasque (20) possède la même distance axiale par rapport à chacun des deux entraînements électriques (5A, 5B).

19. Unité d'entraînement électrique selon la revendication 1, **caractérisée en ce que** les deux arbres de rotor (8A, 8B) présentent des axes de rotation (A) en alignement l'un avec l'autre.
